# EUROPEAN PATENT APPLICATION

(11) **EP 1 385 169 A2**
(43) Date of publication of application: **28.01.2004**
(21) Application number: 03016818.1
(22) Date of filing: 23.07.2003
(51) Int. Cl.: G11B 27/10, G11B 27/34, H04N 5/775, H04N 5/76, H04N 5/445

(54) **Recording/reproducing apparatus**

(30) Priority: 25.07.2002 JP 2002215933
(71) Applicant: Orion Electric Company, Ltd., Takefu-shi, Fukui-ken (JP)
(72) Inventor: Ozaki, Koichi, Takefu-shi, Fukui-Ken (JP)
(74) Representative: Kirschner, Klaus Dieter, Dipl.-Phys.

(57) **Abstract**

A recording/reparoducing apparatus which can easily select with a simple operation a plurality of image information relevant with each other.

When one desired program is selected from a program list, the data of a recording channel, a recording start time and a recoiling day of the week are read out, and programs with the same channel number and the recording start time are selected from other remaining programs. In case a day of the week is designated, programs with the same day of the week are selected. Finally, such selected programs arc numbered in order starting from an old date and then reproduced in numeric order.

## Description

### BACKGROUND OF THE INVENTION

### Field of the Invention:

The present invention relates to a recording/reproducing apparatus for recording video pictures of broadcast programs or the like on a random-access recording medium or for outputting such images to another recording medium.

### Prior Art:

For example, a recent recording/reproducing apparatus for recording and reproducing TV broadcast programs uses a rewritable disc such as hard disc, DVD-R, DVD-RW and so forth as a random-access mass-storage means.

When a program is recorded on a recording medium, image data encoding video signals are stored and one video file is formed. Here, some video signals include audio signals and some other video signals do not include audio signals. Hereunder, both video signals are referred to as video signals.

When image data is recorded, identification information including such as a file name, a recording date and day, a recording time from a start time to an end time, a channel number, a recording mode, a genre and so forth are also stored. One image information is constituted of image data and identification information. Each of the identification information and image data is stored in a predetermined area of a recording medium. The image information, stored in the recording medium is managed as an image file.

When a plurality of image data are recorded in a recording/reproducing apparatus, in order to notify the recorded contents, an identification information with respect to each of image data can be displayed by outputting such information to a display unit such as a TV or a monitor. When a direction for displaying the recorded contents is inputted, an identification information list read out from a recording medium is displayed onto a display unit.

The contents of the displayed list can be sorted under desired conditions. For example, there is disclosed in Japanese Patent Application laid open under No. 2002-32981 that displayed identification information list is sorted under a specified condition and again displayed. Such a condition will be, e.g., a datal order, a title order or a genre order.

The above-described sort is intended for covering all kinds of image information. As a result, it is not possible that only image information of relevant programs such as drama series or the like is selected for sort In case a genre for drama is designated, all dramas recorded from Monday to are selected, and there exist image information of non-relevant dramas.

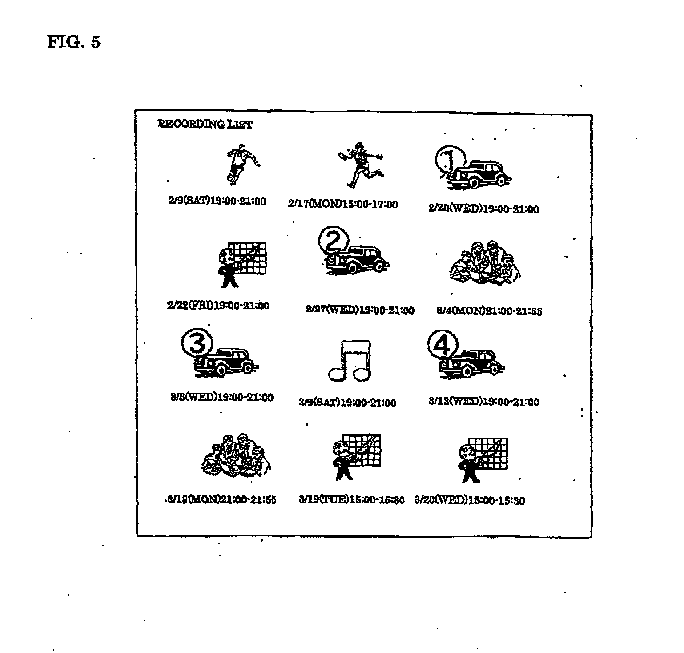

When a recording list as a list of recorded image information is displayed as shown in Fig. 5, it is necessary, in order to select a plurality of relevant image information, for a user to select one by one in order from 1 to 4 while confirming an identification information. It is very troublesome and it takes time.

### SUMMARY OF THE INVENTION

It is therefore an object of the present invention to provide a recording/reproducing apparatus which can easily select with a simple operation a plurality of image information relevant with each other and desirable to a user.

In order to attain the above object, the present invention provides a recording/reproducing apparatus comprising a random access recording medium for recording image information, a selection means for selecting image information relevant to selected image information in case of one image information being selected from a plurality of recorded image information, and an output means for outputting the selected image information for a user's confirmation.

When selecting image iaformation, it is preferable to display a recorded image information list by a display means. Instead thereof, while optional image information is reproduced, relevant image information may be selected. Thus, relevant image information can be obtained at once, so that a user's request, e.g., a request for confirming the contents of a previous program can be easily accepted.

The image information relevant to selected image information is image information containing information corresponding to at least a part of the information contained in the selected image information. Said relevant image information is selected by a selection means.

More concretely, the present invention provides a recording/reproducing apparatus comprising a random access recording medium for recording image information containing identification information comprised of a plurality of items, a display means for displaying a list of the identification information, a reproducing means for reproducing the image information, and a selection means for. selecting image information containing identification information corresponding to at least one item of the selected identification information in case of one identification information being selected from a plurality of displayed identification information, The display means displays identification information of the selected image information in a recognizable manner, and the reproducing means reproduces the selected image information in order according to a predetermined rule.

Here, the image information includes, in addition to image data, respective information such as a recording date, a recording day, recording start time, and data source information. The selection means selects image information consistent with the recording start time of the selected image information and the data source information. Furthermore, the thus selected image information is narrowed down on the basis of a day of the week. The data source information includes, e.g., a channel number of a recorded program, an IP address on Web pages, and a device name from which image information is inputted.

The selected image information is output so as to be distinguishable from other non-relevant image information. For example, at the time of displaying image information, recognition can be made easily by adding a mark, changing color, or displaying only selected ones. The selected image information is output in order according to a predetermined rule, i.e., in order of date and in order of time. The selected image information may be output so as to be reproduced without modification. When the selected image information is relevant to each other, e.g. drama series or the like, the image information can be viewed along the progress of the program by reproducing in order starting from an old dated image information. It is convenient to a user.

### BRIEF DESCRIPTION OF THE DRAWINGS

Fig. 1 is a schematic block diagram showing one embodiment of a recording/reproducing apparatus according to the present invention;

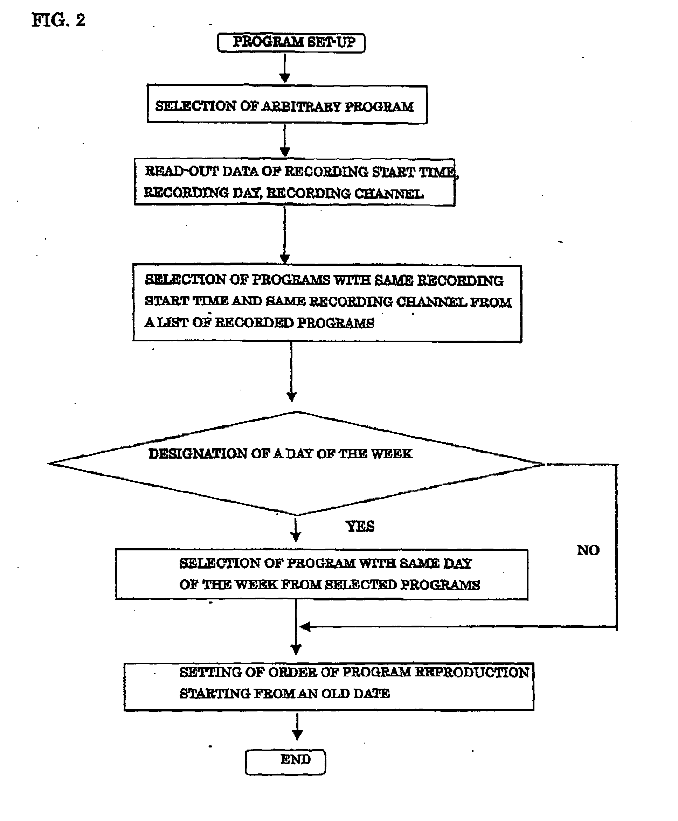

Fig. 2 is an operation flowchart at the time of selecting image information;
Fig. 3 is a view showing a list panel of recorded programs;
Fig. 4 is a view showing a list panel of selected programs; and
Fig. 5 is a view showing a prior art wherein relevant programs are selected one by one from programs recorded.

### DETAILED DESCRIPTION OF THE PREFERRED EMBODIMENTS

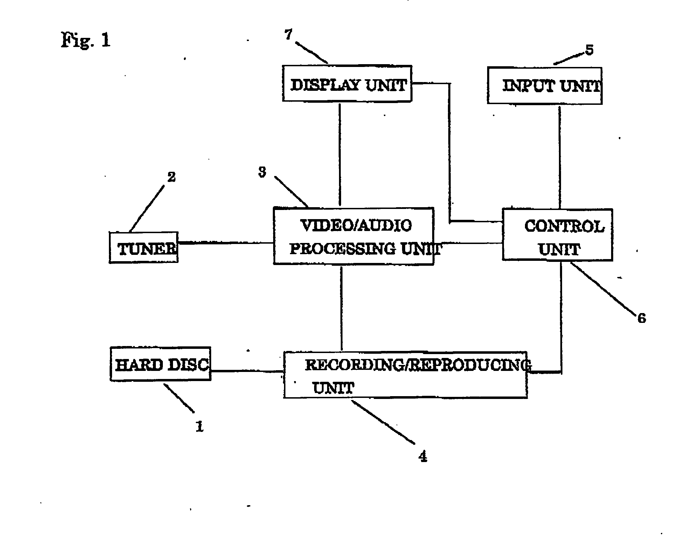

One embodiment of a recording/reproducing apparatus according to the present invention is shown in Fig. 1. The recording/reproducing apparatus is provided with a hard disc 1 as a random-access recording medium, a tuner 2, a video/audio processing unit 3, a recording/reproducing unit 4, an input unit 5, and a control unit 6

Waves from a ground wave broadcasting or a BS broadcasting are input to the tuner 2. The tuner 2 selects waves of a selected channel and outputs the received video signals to the video/audio processing unit 3. The video/audio processing unit 3 demodulates the input video signals and converts to digital signals, and outputs the encoded digital video signals to the recording/reproducing unit 4. The recording/reproducing unit 4 forms a file in a predetermined area of the hard disc 1, and writes the encoded video signals therein. Thus, a broadcast program is recorded in the hard disc 1.

When the recorded program is reproduced, the recording/reproducing unit 4 reads out the image file from the hard disc 1 and outputs the data stored in the file to the video/audio processing unit 3. The video/audio processing unit 3 decodes the encoded video signals and converts the signals to analog signals. The obtained analog video signals are output to a display unit 7 such as a TV or a monitor and to a speaker.

The input unit 5 is a remote controller or an operation panel provided at the main body of the apparatus, which issues a direction of recording/reproducing of programs or editing of image files. The control unit 6 controls the tuner 2, the video/audio processing unit 3, the recording/reproducing unit 4, and the display unit 7 on the basis of the data input from the input unit 5.

Image information to be recorded on the hard disc 1 is constituted of identification information such as a file name, a recording date and day, a recording time from a start time to an end time, a channel number, a recording mode, a genre and so forth and image data consisted of encoded video signals. Such image information is managed as one image file by the control unit 6. A genre is recorded by a user at the time of recording or recording reservation, but a genre may be automatically input at the time of recording.

The control unit 6 operates to select image information relevant to one image information arbitrarily selected from a plurality of image information recorded on the hard disc l, displays tile selected image information so as to be confirmed from the outside, and outputs image information such as a program reproduction which is continuously reproduced. The relevant image information mentioned herein means that in case selected image information is a series of program, said information is image information relevant to a same series of program recorded on another date. Moreover, image information in a same genre, for example, image information for programs such as movies broadcasted on a same day and same time every week or image information for sports programs can be listed as relevant image information.

In order to select image information, the control unit 6 refers to each of a plurality of items regarding identification information such as a recording time, a channel number, a recording day, a genre and a recording date. As for priority sequence of each of the data, top priority is assigned to a channel number, a recording time and especially to a recording start time. Next a day and a genre follow. A recording date is referred at the time the selected image information is placed in the order.

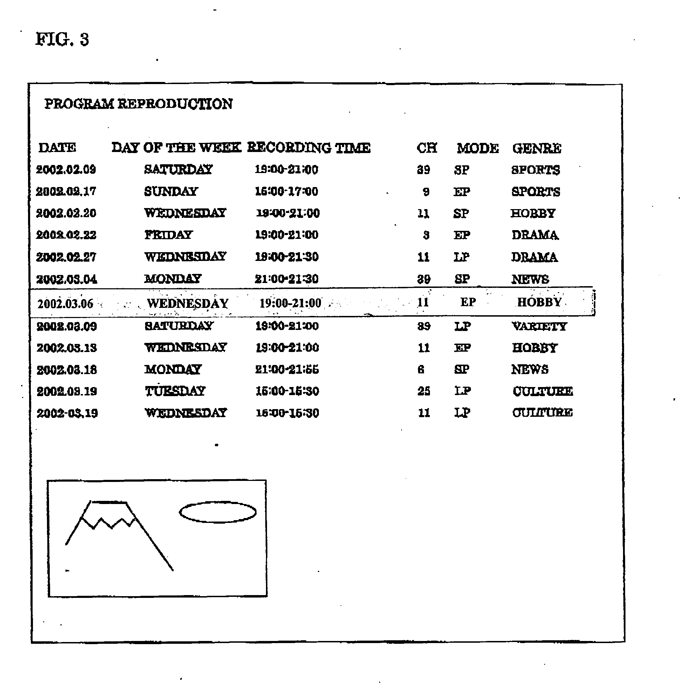

The procedure at the time of selecting image information will be explained with the accompanying flowchart in Fig- 2. In this case, a program reproduction is implemented as outside outputting. First, in order for a user to receive image information regarding respective programs recorded in the hard disc 1, the input unit 5 is operated so as to display the contents of image information. In response to signals output from the input unit 5, the control unit 6 operates the display unit 7 so that an identification information list of recorded image information is displayed. On the display unit 7, as shown in the recording list of Fig. 3, a list of identification information of respective programs is displayed. Namely, information such as a date, a day, a recording time, a channel number, a recording mode and a genre at the time of recording is displayed respectively.

When one specific identification information relevant to a user's desired program is selected from the displayed panel shown in Fig. 3, the control unit 6 reads out data relating to a recording time, especially to a recording start time, a channel number and a day of the selected identification information. In reference to these data and further in comparison with data derived from another identification information, a user selects image information including identification information which is accorded with data relating to a recording start time and a channel number.

Thereafter, whether or not a designation of a day is made is determined. Here, there are four types of designation of a day, i.e., a same day in every week, Monday - Friday, Monday - Saturday, and no designation. A user selects a designation of a day from these four types.

When a designation of is made, the control unit 6 narrows down the image information which is selected on the basis of designated conditions. In case same day in every week is designated, image information with a same day is selected from image information with a same channel number and a same recording start time. In case Monday - Friday is designated, image information with a recording day of Monday - Friday is selected from image information with a same channel number and a same recording start time. In case Monday - Saturday is designated, likewise, image information with a recording day of Monday - Saturday is selected. In case a desigritaon of a recording day is not made, the control unit 6 does not narrow down the image information.

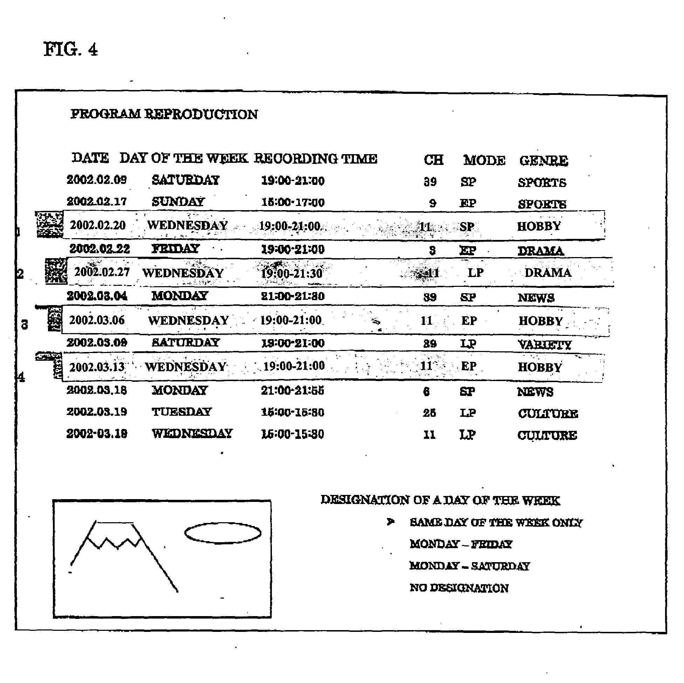

Finally, the genre data of the selected image information is determined and image information belonging to different genres is dropped to remain image information with a same genre. The thus selected plural image information are sorted in order of date starting from an old date by comparing data of the recording date. In such a manner, the order of the program reproduction is set up. Here, as shown in Fig. 4, the number is added, in order of date starting from an old date, to the respective identification information with respect to the image information in order for a user to recognize the selected programs. In this case, other identification information which are not selected are displayed, but alternatively only the selected identification information may be displayed.

After that, the program reproduction is started to reproduce the image information in order of date starting from an old date. Provided that image information of a plurality of relevant programs such as dram series are recorded, when one image information is arbitrarily selected from these image information, relevant image information are selected and displayed or reproduced in desirable order. Accordingly, an editing work for relevant image information such as continuous reproducing or deleting can be easily done.

The present invention is not limited to the above-described specific embodiments but is subject to various changes and modifications within the scope of the invention. For example, instead of hard discs, rewritable DVDs, CDs, and semiconductor memories are applicable as a recording medium. The present recording/reproducing apparatus is applicable, other than to a HDD video recorder, to such a digital instrument equipped with random-access recording medium as a personal computer, a digital camera and a digital video camera. Further, the present recording/reproducing apparatus is applicable to a set-top box equipped with a recording medium, a recording/reproducing unit and a communication facility. Image information may include not only recorded programs but also photographed images, internet web pages and documents.

In the above embodiments, outside outputting is exemplified by a program reproduction. However, such outside outputting may be implemented to a recording medium- For example, in case a recording/reproducing apparatus is provided with a plurality of recording mediums, each of which has a facility of recording and reproducing, relevant image information can be copied with a single operation. Further, the order of outputting may be implemented not only in order of date starting from an old date but also in order of date starting from a young date.

As apparent from the explanation described as above, according to the present invention, relevant image information can be selected from a plurality of image information with a simple operation. And as a result, a continuous reproduction and an editing work can be easily carried out. Accordingly, the present invention can reduce the number of times of a user's operation, thus leading to an improvement of an operationality of the recording/reproducing apparatus,

## Claims

1. A recording/reproducing apparatus comprising a random access recording medium for recording image information, a selection means for selecting image information relevant to selected image information in case of one image information being selected from a plurality of recorded image information, and an output means for outputting said selected image information for a user's confirmation.

2. A recording/reproducing apparatus as claimed in Claim 1, wherein said output means outputs said selected image information in order according to a predetermined rule.

3. A recording/reproducing apparatus as claimed in Claim 1 or Claim 2, wherein said output means is a reproduction means for reproducing selected image information in order.

4. A recording/reproducing apparatus comprising a random access recording medium for recording image information, a display means for displaying a list of said image information, and a selection means for selecting image information containing information corresponding to at least a part of the information contained in the selected image information in case of one image information being sciected from a plurality of displayed image information, said display means displaying said selected image information in a recognizable manner.

5. A recording/reproducing apparatus as claimed in Claim 4, wherein said display means displays said selected image information in order according to a predetermined rule.

6. A recording/reproducmg apparatus as claimed in Claims 1,2, 3, 4 or 5, wherein said image information include respective information such as a recording date, a recording day, recording start time, and data source information, and wherein said selection means selects image information consistent with. said recording start time of said selected image information and said data source information.

7. A recording/producing apparatus as claimed in Claim 6, wherein said selection means narrows down said selected image information on the basis of a day of the week.

8. A recording/reproducing apparatus comprising a random access recording medium for recording image information including identification information comprised of a plurality of items, a display means for displaying a list of said image information, a reproduction means for reproducing said image information, a selection means for selecting image information containing identification information corresponding to at least one item of the selected identification information in case of one identification information being selected from a plurality of displayed identification information, said reproduction means reproducing selected image information in order according to a predetermined rule.

9. A recording/reproducing apparatus as claimed in Claims 2, 5 or 8, wherein said predetermined rule is such that each of a date and a recording start time at the time of recording is listed in order starting from old one.
